# EUROPÄISCHE PATENTSCHRIFT

(11) **EP 2 185 312 B1**
(45) Veröffentlichungstag und Bekanntmachung des Hinweises auf die Patenterteilung: **09.09.2015**
(21) Anmeldenummer: 08786556.4
(22) Anmeldetag: 29.07.2008
(51) Int. Cl.: B23P 15/32, B23B 51/06

(54) **VERFAHREN ZUR HERSTELLUNG EINES BOHRWERKZEUGS FÜR WERKZEUGMASCHINEN**
METHOD FOR THE MANUFACTURE OF A DRILLING TOOL FOR MACHINE TOOLS
PROCÉDÉ POUR LA FABRICATION D'UN OUTIL DE FORAGE POUR MACHINES-OUTILS

(30) Priorität: 06.09.2007 DE 102007042279
(43) Veröffentlichungstag der Anmeldung: 19.05.2010
(73) Patentinhaber: Komet Group GmbH, 74354 Besigheim (DE)
(72) Erfinder: SCHNEIDER, Rico, 74385 Pleidelsheim (DE); STOLZ, Gerhard, 74379 Ingersheim (DE)
(74) Vertreter: Wolf, Pfiz & Gauss Patentanwälte
(86) Internationale Anmeldenummer: PCT/EP2008/059918
(87) Internationale Veröffentlichungsnummer: WO 2009/033878

(56) Entgegenhaltungen:
- DE-A1- 10 333 340
- DE-B- 1 033 340
- DE-U1-202005 020 829
- US-A- 1 641 321
- US-A- 5 676 499
- US-A- 6 045 301

## Beschreibung

Die Erfindung betrifft ein Verfahren nach dem Oberbegriff des Anspruchs 1 zur Herstellung eines Bohrwerkzeugs bestehend aus einem Bohrerkörper mit einem stirnseitigen Schneidkopf und einem endseitigen Schaft, bei welchem ein Grundmaterialkörper auf Bohrkörperkontur unter Bildung eines rotationssymmetrischen ersten Rohlings gedreht wird, in den ersten Rohling mindestens zwei im Abstand voneinander angeordnete Tieflochbohrungen eingebracht werden, die sich von exzentrisch zu einer Zentralachse an der Stirnseite des schneidkopfseitigen Rohlingendes angeordneten Stellen aus in Richtung seines Schafts erstrecken, und bei welchem der auf diese Weise angefertigte zweite Rohling an in axialem Abstand voneinander angeordneten Einspannstellen in einer zwischen diesen befindlichen Zone auf eine vorgegebene Temperatur erhitzt und um einen vorbestimmten Winkel wendelförmig plastisch verdrallt wird.

Bei einem Herstellungsverfahren dieser Art ist es bekannt (EP 0 883 455 B1), dass die Tieflochbohrungen und die Spannuten in einen unverdrallten Grundmaterialkörper eingebracht werden und dass der auf diese Weise vorgefertigte Rohling anschließend an in axialem Abstand voneinander angeordneten Einspannstellen in einer zwischen diesen befindlichen Zone auf eine vorgegebene Temperatur erhitzt und unter gleichzeitigem Verdrehen der Spanfördernuten und der Kühlmittelkanäle wendelförmig plastisch verdrallt wird. Die Kühlmittelkanäle treten in diesem Fall an den stirnseitigen Enden der Rippen aus dem Bohrerkörper aus. Da die Schneiden des durch nachträglich eingesetzte Schneidplatten oder durch eine aufgesetzte Bohrkrone gebildeten Schneidkopfs im Bereich ihrer Spanfläche an die Spanfördernuten anschließen, müssen die Kühlmittelkanäle an ihren stirnseitigen Enden verschlossen und durch Stichbohrungen in Richtung Spanfördernuten umgelenkt werden. Durch diese Maßnahme entsteht ein zusätzlicher Herstellungsaufwand. Außerdem führt die Umlenkung der Kühlmittelkanäle zu einem unerwünschten Druckverlust.

Ausgehend hiervon liegt der Erfindung die Aufgabe zugrunde, das bekannte Verfahren zur Herstellung eines Bohrwerkzeugs dahingehend zu verbessern, dass eine einfachere Einbringung der Kühlmittelkanäle und ein verbesserter Strömungsverlauf an der Austrittsstelle der Kühlmittelkanäle gewährleistet ist.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von der Erkenntnis aus, dass beim Verdrallen eines mit Tieflochbohrungen versehenen Rohlings von den Einspannstellen nach außen hin ein nicht verdrallter Bereich entsteht. Wenn die Spanfördernuten im Anschluss an das Verdrallen wendelförmig in den Bohrerkörper eingebracht, vorzugsweise eingefräst werden, und der gewendelte Fräsvorgang in das unverdrallte schneidkopfseitige Ende des Rohlings fortgesetzt wird, wird das dort befindliche geradlinige Kanalendstück so angefräst, dass sich eine in die Spanfördernut mündende Austrittsöffnung bildet.

Um dies zu erreichen, wird gemäß der Erfindung vorgeschlagen, dass in dem mit den Tieflochbohrungen versehenen verdrallten Rohling eine der Zahl der Tieflochbohrungen entsprechende Anzahl Spanfördernuten so wendelförmig eingefräst wird, dass die verdrallten Tieflochbohrungen innerhalb von zwischen benachbarten Flanken der Spanfördernuten stehen bleibenden Rippen verlaufen, und dass die Tieflochbohrungen auf der Schneidkopfseite in einem unverdrallten geradlinigen Bereich unter Bildung von in die Spanfördernuten mündenden Austrittsöffnungen angefräst werden. Anschließend wird in das schneidkopfseitige Ende des so gebildeten vierten Rohlings in unmittelbarer Nähe der Austrittsöffnungen eine Aufnahme für mindestens eine den Schneidkopf bildende Schneidplatte oder für eine Bohrkrone eingebracht. Vorteilhafterweise wird das schneidkopfseitige Ende des vierten Rohlings nach dem Einfräsen der Spanfördernuten gekürzt

Mit diesen Maßnahmen erhält man ein Bohrwerkzeug, bei welchem die Austrittsöffnungen innerhalb je einer der Spanfördernuten angeordnet sind und über ein geradliniges Kanalendstück mit je einem der Kühlmittelkanäle kommunizieren. Die Austrittsöffnungen erhalten dabei einen in Richtung der Spanfördernuten langgestreckten ovalen oder eiförmigen Umriss. Grundsätzlich ist es auch möglich, dass die Austrittsöffnungen eine entlang den Spanfördernuten verlaufende randoffene Rinne bilden oder dass sich an die Austrittsöffnung innerhalb der Spanfördernuten in Richtung Schneiden verlaufende randoffene Rinnen anschließen. Die Spanfördernuten können dabei auch schneidkopfseitig entlang den Kühlkanälen zumindest partiell ungewendelt sein.

Grundsätzlich ist es möglich, dass auch im Schneidkopf Rinnen angeordnet sind, die mit den Rinnen und/oder Kühlmittelkanälen des Bohrerkörpers kommunizieren. Die Spanabfuhr kann dadurch verbessert werden, dass die Spanfördernuten zum schaftseitigen Ende des Bohrerkörpers hin steiler werden. Damit ist es von Vorteil, wenn auch die Kühlmittelkanäle zum schaftseitigen Ende des Bohrerkörpers hin steiler auslaufen.

Im Zuge der Herstellung können die Tieflochbohrungen entweder parallel oder schräg zueinander mit gleichen oder unterschiedlichen Abständen von einer Zentralachse in den betreffenden Rohling eingebracht werden. Die Tieflochbohrungen werden dabei auf der Schneidkopfseite in ihrem unverdrallten, geradlinigen Bereich zweckmäßig unter Bildung von Austrittsöffnungen mit ovalem oder eiförmigem Umriss angefräst. Dabei ergibt sich zweckmäßig ein im Verlauf der Spanfördernuten langgestreckter Umriss der Austrittsöffnungen. Eine vorteilhafte Ausgestaltung der Erfindung sieht vor, dass die Tieflochbohrungen auf der Schneidkopfseite in ihrem unverdrallten geradlinigen Bereich unter Bildung von im Verlauf der Spanfördernuten ausgerichteten randoffenen Rinnen angefräst werden. Um dies zu erreichen, ist es von Vorteil, wenn die Spanfördernuten im unverdrallten Bereich der Tieflochbohrungen mit zunehmender Wendelsteigung oder ungewendelt, im Wesentlichen parallel zu den Tieflochbohrungen eingefräst und die Tieflochbohrungen dabei unter Bildung der randoffenen Rinnen angefräst werden. Grundsätzlich ist es möglich, dass im Anschluss an die Einbringung der Spanfördernuten und der Austrittsöffnungen zusätzliche randoffene Rinnen in die Spanfördernuten eingefräst werden.

Im Folgenden wird die Erfindung anhand der in der Zeichnung in schernatischer Weise dargestellten Ausführungsbeispiele näher erläutert. Es zeigen
- Fig. 1a und b: eine Seitenansicht und eine Draufsicht eines Wechselkopfbohrers;
- Fig. 2a bis c: ein Schema des Verfahrensablaufs bei der Herstellung eines verdrallten Bohrerkörpers aus einem auf Bohrkörperkontur gedrehten Rohling;
- Fig. 3: einen vergrößerten Ausschnitt des schneidkopfseitigen Endes des gewendelten Bohrerkörperrohlings;
- Fig. 4a und: b eine schaubildliche Darstellung und eine Seitenansicht des schneidkopfseitigen Bohrerkörperrohlings mit rinnenförmigem Kühlmittelkanalaustritt.

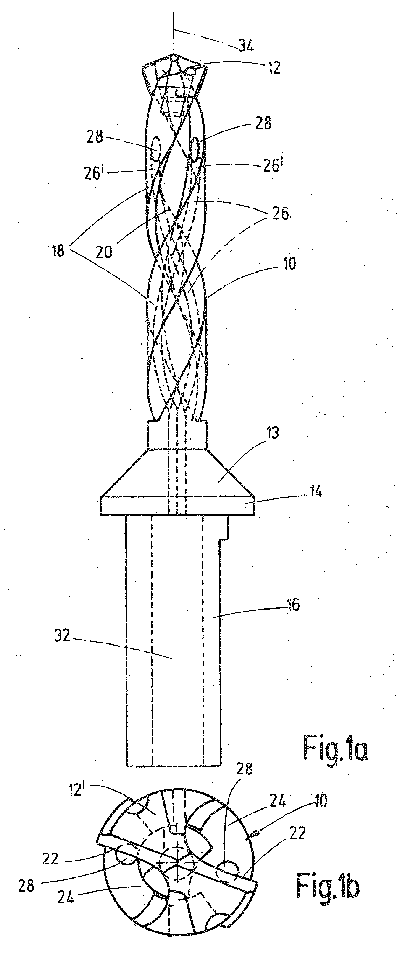

Das in der Zeichnung dargestellte Bohrwerkzeug ist für den Einsatz in Werkzeugmaschinen bestimmt. Es weist einen Bohrerkörper 10, einen stirnseitig am Bohrerkörper 10 angeordneten, als Bohrkrone ausgebildeten Schneidkopf 12 sowie einen über einen Anschlagbund 14 mit dem Bohrerkörper 10 verbundenen, in einem nicht dargestellten Werkzeughalter einspannbaren Schaft 16 auf. Der Bohrerkörper 10 enthält zwei an ihren Flanken durch Rippen 18 begrenzte Spanfördernuten 20, die auf der Schneidkopfseite sich bis in die durch die Schneiden 22 begrenzten Spanflächen 24 innerhalb der Bohrkrone 12' erstrecken. Bei dem in Fig. 1a und b gezeigten Ausführungsbeispiel sind die Spanfördernuten 20 und dessen Begrenzungsrippen 18 über die gesamte Länge des Bohrerkörpers spiralförmig gewendelt. Außerdem befinden sich im Bohrerkörper Kühlmittelkanäle 26, die innerhalb des überwiegenden Teils der Rippen 18 mit der gleichen Steigung gewendelt verlaufen und die zur Schneidkopfseite hin in einen geradlinigen Kanalabschnitt 26' übergehen. Die Kanalabschnitte 26' werden dort von den gewendelten Spanfördernuten 20 unter Bildung einer ovalen, in die Spanfördernut weisenden Austrittsöffnung 28 angeschnitten. Die Austrittsöffnungen sind so positioniert, dass sie über die Spanfläche 24 auf die zugehörigen Schneiden 22 der Bohrkrone 12'gerichtet sind.

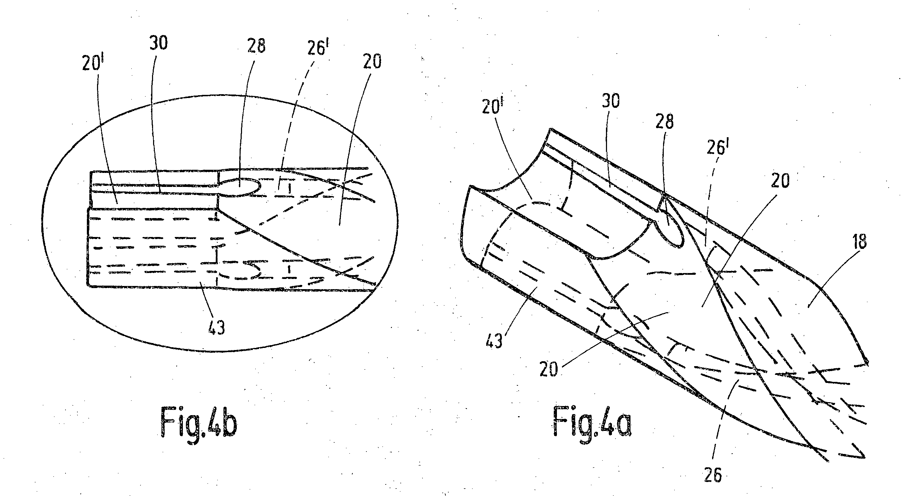

Wie aus Fig. 4a und b zu ersehen ist, ist es möglich, den schneidkopfseitigen Teil 20' der Spanfördernuten ungewendelt zu belassen und die Austrittsöffnung 28 durch eine langgestreckte Rinne 30 für den Kühlmittelaustritt zu verlängern.

Grundsätzlich ist es möglich, auch in den Schneidkopf randoffene Rinnen einzubringen, die im montierten Zustand mit den Austrittsöffnungen 28 im Bohrerkörper 10 kommunizieren. Damit wird sowohl die Kühlung als auch die Spanförderung verbessert. Die Spanförderung kann auch dadurch verbessert werden, dass die Spanfördernuten zum schaftseitigen Ende des Bohrerkörpers hin steiler werden. Dementsprechend laufen auch die Kühlmittelkanäle zum schaftseitigen Ende des Bohrerkörpers hin steiler aus.

Aus Fig. 1a und b ist ersichtlich, dass der Schneidkopf 12 als Bohrkrone ausgebildet ist und der Bohrerkörper eine Kupplungsaufnahme für ein an der Bohrkrone angeordnetes Kopplungsteil aufweist.

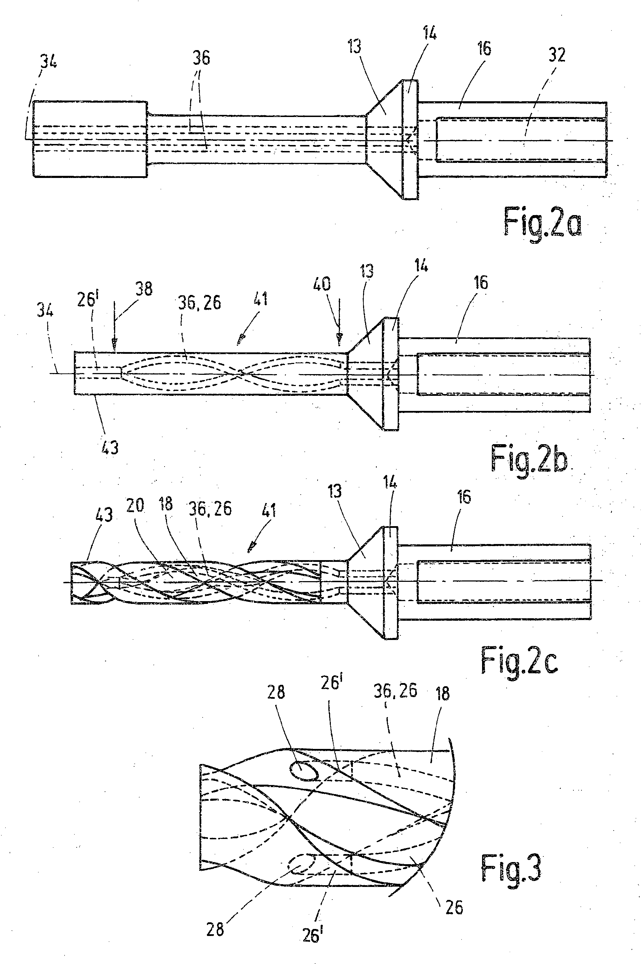

Wie aus Fig. 2a bis c zu ersehen ist, erfolgt die Herstellung des Bohrerkörpers 10 in folgenden Arbeitsschritten:
Zunächst wird ein zylindrischer Grundmaterialkörper in einer Drehmaschine auf Bohrkörperkontur gedreht und mit dem Schaft 16 sowie mit dem Kegelübergang 13 zum Anschlagbund 14 versehen. Noch in der Drehmaschine wird eine den Versorgungskanal 32 bildende Zentralbohrung von der Schäftseite aus bis in den Bereich des Anschlagbundes 14 eingebracht. Außerdem werden von der schneidkopfseitigen Stirnseite her zwei bezüglich der Zentralachse 34 exzentrische Tieflochbohrungen 36 eingebracht, die sich bis zum zentralen Versorgungskanal 32 am schaftseitigen Ende des Bohrerkörpers 10 erstrecken (Fig. 2a). Abschließend wird das schneidkopfseitige Ende 12 des Bohrerkörpers 10 auf Bohrerkörperdurchmesser abgedreht und stirnseitig gekürzt.

Der auf diese Weise vorgefertigte zweite Rohling wird an den in Fig. 2b durch Pfeile gekennzeichneten Stellen 38, 40 eingespannt und in der zwischen diesen befindlichen Zone 41 auf eine vorgegebene Temperatur erhitzt und um einen vorbestimmten Winkel wendelförmig plastisch verdrallt. Dadurch werden die Tieflochbohrungen 36 unter Bildung von Kühlmittelkanälen 26 mit einer vorgegebenen Steigung wendelförmig gekrümmt. Im schneidkopfseitigen Bereich vor der Einspannstelle 38 an bleiben die Tieflochbohrungen 36 unter Bildung der geradlinigen Kanalabschnitte 26' unverdrallt (Fig. 2b). Entsprechendes gilt für den schaftfreien Bereich außerhalb der Einspannstelle 40.

In einem dritten Verfahrensschritt gemäß Fig. 2c werden dann die Spanfördernuten 20 über die Länge des Bohrerkörpers 10 so spiralförmig eingefräst, dass die gewendelten Kühlmittelkanäle 26 in den die Spanfördernuten 20 begrenzenden Rippen 18 zu liegen kommen. Der gewendelte Fräsvorgang setzt sich auch in den unverdrallten Bereich 43 des Bohrerkörpers fort, so dass dort die geradlinigen Kanalabschnitte 26' unter Bildung der ovalen oder eiförmigen Austrittsöffnung 28 angefräst werden. Die Lage der Austrittsöffnungen 28 kann durch die relative Zuordnung der gewendelten Spanfördernut 20 zu den Kühlmittelkanälen 26 mit ihren geradlinigen Kanalabschnitten 26' so bestimmt werden, dass sie in die gewünschte Richtung innerhalb ihrer Spanfördernut weisen (Fig. 2c und Fig. 3).

Grundsätzlich ist es auch möglich, durch Veränderung der Wendelsteigung beim Fräsvorgang die Austrittsöffnung 28 zur Bildung einer langgestreckten Rinne 30 länger zu gestalten. Bei dem in Fig. 4a und b gezeigten Ausführungsbeispiel ist abweichend hierzu in das schneidkopfseitige Ende des Bohrerkörpers 10 ein unverdrallter Abschnitt 20' der Spanfördernut eingebracht, in die eine von der Austrittsöffnung 28 aus achsparallel verlaufende Rinne 30 für den Kühlmitteltransport eingeformt ist. Mit dieser Maßnahme wird erreicht, dass das Kühlmittel von der Austrittsöffnung 28 aus ungestört bis zur schneidkopfseitigen Spanfläche 24 gelangen und die dort entstehenden Späne leichter abtransportieren kann.

Zusammenfassend ist folgendes festzuhalten: Die Erfindung betrifft ein Verfahren zur Herstellung eines Bohrwerkzeugs für Werkzeugmaschinen mit einem Bohrerkörper 10 und einem stirnseitig am Bohrerkörper 10 angeordneten Schneidkopf 12. Der Bohrerkörper 10 weist mindestens zwei an ihren Flanken durch Rippen 18 begrenzte Spanfördernuten 20 auf, von denen mindestens eine wendelförmig gekrümmt ist. In den Rippen 18 des Bohrerkörpers 10 sind Kühlmittelkanäle 26 angeordnet, die am schneidkopfseitigen Ende des Bohrerkörpers eine Austrittsöffnung 28 aufweisen. Eine Besonderheit besteht darin, dass die Austrittsöffnungen 28 innerhalb je einer der Spanfördernuten 20 angeordnet sind und über ein geradliniges Kanalendstück 26' mit einem der in den Rippen 18 angeordneten Kühlmittelkanäle 26 kommunizieren.

## Patentansprüche

1. Verfahren zur Herstellung eines Bohrwerkzeugs bestehend aus einem Bohrerkörper (10) mit einem stirnseitigen Schneidkopf (12) und einem endseitigem Schaft (16), bei welchem
- ein Grundmaterialkörper auf Bohrkörperkontur unter Bildung eines rotationssymmetrischen ersten Rohlings gedreht wird,
- in den ersten Rohling mindestens zwei im Abstand voneinander angeordnete Tieflochbohrungen (36) eingebracht werden, die sich von exzentrisch zu einer Zentralachse (34) an der Stirnseite des schneidkopfseitigen Rohlingendes angeordneten Stellen aus in Richtung seines Schafts (16) erstrecken,
- der auf diese Weise vorgefertigte zweite Rohling an in axialem Abstand voneinander angeordneten Einspannstellen (38, 40) in einer zwischen diesen befindlichen Zone auf eine vorgegebene Temperatur erhitzt und um einen vorbestimmten Winkel wendelförmig plastisch verdrallt wird,
**dadurch gekennzeichnet, dass** in den so gebildeten dritten Rohling eine der Zahl der Tieflochbohrungen (36, 26) entsprechende Anzahl Spanfördernuten (20) so wendelförmig eingefräst wird, dass die verdrallten Tieflochbohrungen innerhalb von zwischen benachbarten Flanken der Spanfördernuten (20) stehen bleibenden Rippen (18) verlaufen, und dass die Tieflochbohrungen (36, 26) auf der Schneidkopfseite in einem unverdrallten geradlinigen Bereich (26') unter Bildung von in die Spanfördernuten (20) mündenden Austrittsöffnungen (28) angefräst werden.

2. Verfahren nach Anspruch 1, **dadurch gekennzeichnet, dass** in das schneidkopfseitige Ende des so gebildeten vierten Rohlings in unmittelbarer Nähe der Austrittsöffnungen (28) eine Aufnahme für mindestens eine den Schneidkopf bildenden Schneidplatte oder für eine Bohrkrone (12') eingebracht wird.

3. Verfahren nach Anspruch 1 oder 2, **dadurch gekennzeichnet, dass** das schneidkopfseitige Ende des Rohlings nach dem Einfräsen der Spanfördernuten (20) gekürzt wird.

4. Verfahren nach einem der Ansprüche 1 bis 3, **dadurch gekennzeichnet, dass** die Tieflochbohrungen (36) parallel oder schräg zur Zentralachse (34) in den ersten Rohling eingebracht werden.

5. Verfahren nach einem der Ansprüche 1 bis 4, **dadurch gekennzeichnet, dass** die Tieflochbohrungen (36) in unterschiedlichen Abständen von einer Zentralachse (34) in den ersten Rohling eingebracht werden.

6. Verfahren nach einem der Ansprüche 1 bis 5, **dadurch gekennzeichnet, dass** die Tieflochbohrungen (36, 26) auf der Schneidkopfseite in ihrem unverdrallten geradlinigen Bereich (26') unter Bildung von Austrittsöffnungen (28) mit ovalem, eiförmigem oder im Verlauf der Spanfördernuten (20) langgestrecktem Umriss angefräst werden.

7. Verfahren nach einem der Ansprüche 1 bis 6, **dadurch gekennzeichnet, dass** die Tieflochbohrungen (36, 26) auf der Schneidkopfseite in ihrem unverdrallten geradlinigen Bereich (26') unter Bildung von im Verlauf der Spanfördernuten (20) als randoffene Rinnen (30) ausgebildeten Austrittsöffnungen angefräst werden.

8. Verfahren nach Anspruch 7, **dadurch gekennzeichnet, dass** die Spanfördernuten (20) im unverdrallten Bereich (26') der Tieflochbohrungen (36, 26) mit zunehmender Wendelsteigung oder ungewendelt im Wesentlichen parallel zu den Tieflochbohrungen (36) eingefräst und die Tieflochbohrungen dabei unter Bildung von als randoffene Rinnen (30) ausgebildeten Austrittsöffnungen angefräst werden.

9. Verfahren nach einem der Ansprüche 1 bis 8, **dadurch gekennzeichnet, dass** im Anschluss an die Austrittsöffnungen (28) randoffene Rinnen (30) in die Spanfördernuten (20) eingefräst werden.

10. Verfahren nach einem der Ansprüche 1 bis 9, **dadurch gekennzeichnet, dass** der Schneidkopf (12) als Bohrkrone ausgebildet ist und dass in den Schneidkopf randoffene Rinnen eingebracht werden, die im montierten Zustand mit den Austrittsöffnungen (28) im Bohrerkörper (10) kommunizieren.

## Claims

1. Method for the production of a drilling tool comprising a drill body (10) having an end cutting head (12) and having an end shank (16), in which
- a base material body is turned to the drilling body contour forming a rotationally symmetrical first blank,
- at least two deep-hole bores (36) are incorporated in the first blank which deep-hole bores (36) are arranged at a distance from one another and extend in the direction of the shank (16) of the blank from points which are arranged eccentrically with respect to a central axis (34) on the end face of the cutting-head blank end,
- the second blank, which has been prefabricated in this way is heated to a predetermined temperature at clamping-in points (38, 40) which are arranged at an axial distance from one another, in a zone located between these clamping-in points (38, 40) and is twisted plastically in a helical shape through a predetermined angle.
**characterized in that** a number of chip flutes (20), corresponding to the number of deep-hole bores (36, 26), are milled in a helical shape in the third blank which has been formed in this way, such that the twisted deep-hole bores run within ribs (18) which remain between adjacent flanks of the chip flutes (20), and such that the deep-hole bores (36, 26) are milled on the cutting-head side in an untwisted straight area (26') forming outlet openings (28) which open into the chip flutes (20).

2. Method according to Claim 1, **characterized in that** a holder for at least one cutting insert, which forms the cutting head, or for a drill bit (12') is incorporated in the cutting-head end of the fourth blank which has been formed in this way, in the immediate vicinity of the outlet openings (28).

3. Method according to Claim 1 or 2, **characterized in that** the cutting-head end of the blank is shortened after the chip flutes (20) have been milled in.

4. Method according to one of Claims 1 to 3, **characterized in that** the deep-hole bores (36) are incorporated in the first blank parallel to or inclined with respect to the central axis (34).

5. Method according to one of Claims 1 to 4, **characterized in that,** the deep-hole bores (36) are incorporated in the first blank at different distances from a central axis (34).

6. Method according to one of Claims 1 to 5, **characterized in that** the deep-hole bores (36, 26) are milled on the cutting-head side in their untwisted straight area (26') forming outlet openings (28) with an oval or egg-shaped outline or with an outline which is elongated in the profile of the chip flutes (20).

7. Method according to one of Claims 1 to 6, **characterized in that** the deep-hole bores (36, 26) are milled on the cutting-head side in their untwisted straight area (26') forming outlet openings which are in the form of grooves (30) which are open at the edge, in the profile of the chip flutes (20).

8. Method according to Claim 7, **characterized in that** the chip flutes (20) are milled in the untwisted area (26') of the deep-hole bores (36, 26), with an increasing helix pitch, or without any helix, essentially parallel to the deep-hole bores (36), and the deep-hole bores are in this case milled forming outlet openings which are in the form of grooves (30) which are open at the edge.

9. Method according to one of Claims 1 to 8, **characterized in that** grooves (30) which are open at the edge, are milled into the chip flutes (20) adjacent to the outlet openings (28).

10. Method according to one of Claims 1 to 9, **characterized in that** the cutting head (12) is in the form of a drill bit and **in that** grooves which are open at the edge are incorporated in the cutting head and, in the installed state, communicate with the outlet openings (28) in the drill body (10).

## Revendications

1. Procédé pour la fabrication d'un outil de forage, constitué d'un corps de foret (10) avec une tête de coupe (12) du côté frontal et une tige (16) du côté de l'extrémité, dans lequel
- un corps en matériau de base est tourné au contour du corps de foret en formant une première ébauche à symétrie de révolution,
- au moins deux forages de trous profonds (36) disposés à distance l'un de l'autre sont pratiqués dans la première ébauche, lesquels s'étendent depuis des emplacements disposés de manière excentrique par rapport à un axe central (34) au niveau du côté frontal de l'extrémité de l'ébauche du côté de la tête de coupe dans la direction de sa tige (16),
- la deuxième ébauche préfabriquée de cette manière est chauffée à une température prédéfinie au niveau d'emplacements de serrage (38, 40) disposés à distance axiale l'un de l'autre dans une zone se trouvant entre eux et est torsadée plastiquement en forme d'hélice suivant un angle prédéterminé,
**caractérisé en ce que** dans la troisième ébauche ainsi formée, un certain nombre de rainures de transport de copeaux (20) correspondant au nombre des forages de trous profonds (36, 26) est fraisé en forme d'hélice de telle sorte que les forages de trous profonds torsadés s'étendent à l'intérieur de nervures (18) restant verticalement entre des flancs adjacents des rainures de transport de copeaux (20), et **en ce que** les forages de trous profonds (36, 26) sont fraisés au niveau du côté de la tête de coupe dans une région non torsadée rectiligne (26') en formant des ouvertures de sortie (28) débouchant dans les rainures de transport de copeaux (20).

2. Procédé selon la revendication 1, **caractérisé en ce que** dans l'extrémité du côté de la tête de coupe de la quatrième ébauche ainsi formée est pratiqué, à proximité immédiate des ouvertures de sortie (28), un logement pour au moins une plaquette de coupe formant la tête de coupe ou pour une couronne de forage (12').

3. Procédé selon la revendication 1 ou 2, **caractérisé en ce que** l'extrémité de l'ébauche du côté de la tête de coupe est raccourcie après le fraisage des rainures de transport de copeaux (20).

4. Procédé selon l'une quelconque des revendications 1 à 3, **caractérisé en ce que** les forages de trous profonds (36) sont pratiqués dans la première ébauche parallèlement ou obliquement par rapport à l'axe central (34).

5. Procédé selon l'une quelconque des revendications 1 à 4, **caractérisé en ce que** les forages de trous profonds (36) sont pratiqués à des distances différentes d'un axe central (34) dans la première ébauche.

6. Procédé selon l'une quelconque des revendications 1 à 5, **caractérisé en ce que** les forages de trous profonds (36, 26) sont fraisés sur le côté de la tête de coupe dans sa région non torsadée rectiligne (26') en formant des ouvertures de sortie (28) de pourtour ovale, ovoïde, ou allongé dans l'étendue des rainures de transport de copeaux (20).

7. Procédé selon l'une quelconque des revendications 1 à 6, **caractérisé en ce que** les forages de trous profonds (36, 26) sont fraisés sur le côté de la tête de coupe dans sa région non torsadée rectiligne (26') en formant des ouvertures de sortie réalisées sous forme de gorges ouvertes aux bords (30) dans l'étendue des rainures de transport de copeaux (20).

8. Procédé selon la revendication 7, **caractérisé en ce que** les rainures de transport de copeaux (20) sont fraisées dans la région non torsadée (26') des perçages de trous profonds (36, 26) avec un pas d'hélice croissant ou sans torsion essentiellement parallèlement aux forages de trous profonds (36) et les forages de trous profonds sont en l'occurrence fraisés en formant des ouvertures de sortie réalisées sous forme de gorges ouvertes aux bords (30).

9. Procédé selon l'une quelconque des revendications 1 à 8, **caractérisé en ce qu'**à la suite des ouvertures de sortie (28), des gorges ouvertes aux bords (30) sont fraisées dans les rainures de transport de copeaux (20).

10. Procédé selon l'une quelconque des revendications 1 à 9, **caractérisé en ce que** la tête de coupe (12) est réalisée sous forme de couronne de forage et **en ce que** des gorges ouvertes aux bords sont pratiquées dans la tête de coupe, lesquelles communiquent dans l'état monté avec les ouvertures de sortie (28) dans le corps de foret (10).
